# EUROPÄISCHE PATENTSCHRIFT

(11) **EP 1 353 427 B1**
(45) Veröffentlichungstag und Bekanntmachung des Hinweises auf die Patenterteilung: **08.04.2009**
(21) Anmeldenummer: 02405283.9
(22) Anmeldetag: 09.04.2002
(51) Int. Cl.: H02H 3/05, H02H 7/26

(54) **Redundante Übertragung von Schutzbefehlen zwischen Fernauslösegeräten**
Redondant transmission of protective commands for remote-trip-devices
Transmission redondante des ordres de protection pour des appareils à déclenchement à distance

(43) Veröffentlichungstag der Anmeldung: 15.10.2003
(73) Patentinhaber: ABB Schweiz AG, 5400 Baden (CH)
(72) Erfinder: Spiess, Hermann, 5245 Habsburg (CH); Strittmatter, Michael, 5330 Zurzach (CH); Kranich, Mathias, 79774 Albbruck (DE)
(74) Vertreter: ABB Patent Attorneys

(56) Entgegenhaltungen:
- EP-A- 0 311 251
- WO-A-99/63635
- US-A- 5 267 231

## Beschreibung

### Technisches Gebiet

Die Erfindung bezieht sich auf das Gebiet der Schutztechnik für Hoch- und Mittelspannungsnetze. Sie bezieht sich auf ein Verfahren und eine Einrichtung zur redundanten Übertragung von Schutzbefehlen zwischen Fernauslösegeräten gemäss dem Oberbegriff der Patentansprüche 1 und 5.

### Stand der Technik

Fernauslösegeräte oder Schutzsignalübertragungsgeräte dienen zur Übertragung von Schutz- oder Schaltbefehlen in elektrischen Hoch- und Mittelspannungsnetzen sowie -anlagen, beispielsweise für einen Distanzschutz. Schutzbefehle bewirken beispielsweise eine direkte oder indirekte Öffnung eines Schutzschalters und dadurch eine elektrische Abtrennung eines Teiles des Netzes oder der Anlage. Andere Schutzbefehle bewirken umgekehrt eine Blockierung der Öffnung eines Schutzschalters. In einem Ruhefall, das heisst, wenn kein Schutzbefehl übertragen wird, wird stattdessen kontinuierlich ein Ruhesignal oder Guardsignal gesendet.

Schutzbefehle müssen beispielsweise von einem Abschnitt einer Hochspannungsleitung zu einem anderen übertragen werden. Dazu erzeugt ein Sender in einem Fernauslösegerät entsprechend den Schutzbefehlen digitale Signale, die über eine digitale Signalverbindung übertragen werden, beispielsweise gemäss einem E1 (Synchronous Digital Hierarchy, SDH) oder T1 (SONET) Kommunikationsstandard. Ein Empfänger in einem anderen Fernauslösegerät detektiert die übertragenen Signale und bestimmt die entsprechende Anzahl und Art der Schutzbefehle. Um trotz Kanalausfällen die Übertragung zu gewährleisten, werden redundante Übertragungsmittel vorgesehen. Dabei empfängt beispielsweise der Empfänger auf einem ersten Kanal und wird, falls der Kanal unterbrochen ist, auf einen zweiten Kanal umgeschaltet. Eine dazu erforderliche Umschaltzeit beträgt jedoch 20ms bis 50ms, was für die Schutzsignalübertragung zu lange ist. Eine Lösung, in welcher jedes Schutzgerät zwei Schnittstellen zu separaten Übertragungswegen verwendet, ist zu aufwendig. US 4819225 zeigt ein Datenübertragungssystem mit sender- und empfängerseitig je zwei Schnittstellen zu redundanten Übertragungswegen

### Darstellung der Erfindung

Es ist deshalb Aufgabe der Erfindung, ein Verfahren und eine Einrichtung zur redundanten Übertragung von Schutzbefehlen zwischen Fernauslösegeräten der eingangs genannten Art zu schaffen, welche die oben genannten Nachteile beheben. Diese Aufgabe lösen ein Verfahren und eine Einrichtung zur redundanten Übertragung von Schutzbefehlen zwischen Fernauslösegeräten mit den Merkmalen der Patentansprüche 1 und 5.

Im erfindungsgemässen Verfahren und der Einrichtung zur redundanten Übertragung von Schutzbefehlen zwischen Fernauslösegeräten wird also eine Nutzinformation durch ein erstes Fernauslösegerät in mindestens zwei Zeitschlitzen über eine erste Schnittstelle an einen ersten Multiplexer übertragen und durch den Multiplexer nach Massgabe der Zeitschlitze über unterschiedliche Übertragungswege übermittelt.

Dadurch ist am Fernauslösegerät für eine redundante Übertragung nur eine einzige Schnittstelle erforderlich.

In einer bevorzugten Ausführungsform der Erfindung wird die Nutzinformation in einem zweiten Multiplexer empfangen und nach Massgabe des jeweiligen Übertragungsweges in einem zugeordneten Zeitschlitz über eine zweite Schnittstelle an das zweite Fernauslösegerät übertragen.

Dadurch ist auch im empfangenden Fernauslösegerät nur eine einzige Schnittstelle erforderlich, und geschieht ein Empfang redundanter Signale, ohne dass eine Umschaltung zwischen Übertragungswegen oder -Kanälen erforderlich ist.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in der beiliegenden Zeichnung dargestellt sind, näher erläutert. Die Figur zeigt schematisch eine Einrichtung zur redundanten Übertragung von Schutzbefehlen zwischen Fernauslösegeräten. Die in der Zeichnung verwendeten Bezugszeichen und deren Bedeutung sind in der Bezugszeichenliste zusammengefasst aufgelistet.

### Wege zur Ausführung der Erfindung

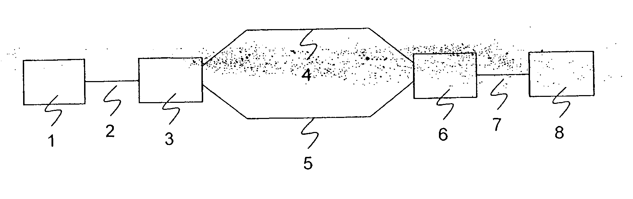

Figur 1 zeigt schematisch eine Einrichtung zur redundanten Übertragung von Schutzbefehlen zwischen Fernauslösegeräten. Es ist darin ein erstes Fernauslösegerät 1 über eine erste Schnittstelle 2 mit einem ersten Multiplexer 3 verbunden. Vom ersten Multiplexer 3 führen mindestens ein erster Übertragungsweg 4 und ein zweiter Übertragungsweg 5, wobei die Übertragungswege oder Übertragungskanäle 4,5 voneinander verschieden sind, zu einem zweiten Multiplexer 6. Dieser ist über eine zweite Schnittstelle 7 mit einem zweiten Fernauslösegerät 8 verbunden.

Die erste Schnittstelle 2 und zweite Schnittstelle 7 sind beispielsweise bekannte, standardisierte El- oder Tl-Schnittstellen. In einem Datenübertragungssystem gemäss dem Tl-Standard werden Datenbytes aus 24 Kanälen nach einem Zeitmultiplexverfahren in einen Bitstrom umgewandelt; im El-Standard sind es 30 Kanäle. Der Bitstrom ist in eine Folge von Datenrahmen unterteilt, wobei ein Datenrahmen aus einem Synchronisationsbit und aus je einem Datenbyte der einzelnen Kanäle besteht. Aufeinanderfolgende Datenbytes eines bestimmten Kanals werden also in periodisch auftretenden Zeitschlitzen übertragen.

Erfindungsgemäss wird eine Nutzinformation, welche einen Schutzbefehl oder ein Ruhesignal repräsentiert, als Bitmuster nicht nur über einen, sondern über mindestens zwei Kanäle der Schnittstelle übertragen. Diese Übertragung geschieht im selben oder in einem unmittelbar benachbarten Datenrahmen, also im wesentlichen gleichzeitig.

Die Multiplexer 3,6 dienen in bekannter Weise zur Aufteilung von Signalen, welche auf einer oder mehreren Schnittstellen empfangen werden, auf andere Schnittstellen respektive Übertragungswege oder -kanäle. Der erste Multiplexer 3 ist derart konfiguriert, dass mindestens zwei der Kanäle respektive Zeitschlitze jeweils einem bestimmten Übertragungsweg 4,5 zugeordnet sind. Die Übertragungswege 4,5 entsprechen physisch verschiedenen Leitungen und Verbindungen eines digitalen Kommunikationsnetzwerkes beliebiger Topologie, beispielsweise gemäss einem Synchronous Digital Hierarchy (SDH) Standard. Darin lassen sich beispielsweise Punkt-zu-Punkt Kommunikationsverbindungen über Relais-oder Routerstationen definieren, welche den hier verwendeten Übertragungswegen 4,5 zwischen den Multiplexern 3,6 entsprechen.

Dadurch, dass in verschiedenen Zeitschlitzen dieselbe Nutzinformation im wesentlichen gleichzeitig übertragen wird, und durch die Zuordnung von Zeitschlitzen zu unterschiedlichen Übertragungswegen 4,5 wird eine redundante Übertragung der Nutzinformation über unterschiedliche Übertragungswege 4,5 bewirkt. Es sind dabei ohne weiteres mehr als zwei Zeitschlitze und Übertragungswege für eine mehrfachredundante Übertragung verwendbar. Auf der ersten Schnittstelle 2 und im ersten Multiplexer 3 stehen die nicht benutzten Zeitschlitze respektive Kanäle für andere Anwendungen zur Verfügung.

Die zweite Schnittstelle 7 arbeitet ebenfalls mit einem Zeitmultiplexverfahren, aber nicht notwendigerweise nach demselben Verfahren wie die erste Schnittstelle 2. Der zweite Multiplexer 6 überträgt Nutzinformation, welche auf einem bestimmten Übertragungsweg 4,5 empfangen wird, auf einen zugeordneten Zeitschlitz der zweiten Schnittstelle 7. Falls keiner der Übertragungswege 4,5 unterbrochen ist, erhält also das zweite Fernauslösegerät 8 dieselbe Nutzinformation zweimal, und in verschiedenen Zeitschlitzen der zweiten Schnittstelle 7. Zur Auswertung der doppelt empfangenen Nutzsignale benötigt das zweite Fernauslösegerät 8 zwar die doppelte Rechenleistung, aber keine zusätzliche Hardware.

Falls die Nutzinformation einen Schutz- oder Schaltbefehl darstellt, wird in einer bevorzugten Ausführungsform der Erfindung aus einem Schutzbefehl, der über den ersten Übertragungsweg 4 übermittelt wurde, und einem dazu redundanten Schutzbefehl, der über den zweiten Übertragungsweg 5 übermittelt wurde, durch eine nicht exklusive ODER-Verknüpfung ein kombinierter Schutzbefehl gebildet. Ist einer der Übertragungswege 4,5 unterbrochen, so wird trotzdem der kombinierte Schutzbefehl ohne eine Umschaltverzögerung gebildet.

Aufgrund von unterschiedlichen Übertragungsverzögerungen kann es vorkommen, dass ein Schaltbefehl, der über den ersten Übertragungsweg 4 übertragen wird, bereits nicht mehr am zweiten Fernauslösegerät 8 empfangen wird, bevor die Übertragung über den zweiten Übertragungsweg 5 das zweite Fernauslösegerät 8 erreicht hat. In diesem Fall würde das zweite Fernauslösegerät 8 nach der ODER-Verknüpfung den Schaltbefehl zweimal empfangen. Um dies zu vermeiden wird entweder der Schaltbefehl durch das erste Fernauslösegerät 1 mindestens während einer Zeitdauer gesendet, die der maximalen Laufzeitdifferenz zwischen den Übertragungswegen 4,5 plus einer Sicherheitsmarge entspricht, oder es wird der kombinierte Schaltbefehl nach der ODER-Verknüpfung jeweils um diese Zeitdauer verlängert ausgegeben. Dieses Vorgehen wird auch Befehlsverlängerung oder "command prolongation" genannt, typische Werte sind 5 bis 100 ms oder auch länger. Dadurch wird gewährleistet, dass beim Eintreffen eines verzögerten Schaltbefehls der früher eingetroffene Schaltbefehl respektive der kombinierte Schaltbefehl immer noch aktiv ist.

Ein weiterer Vorteil der Erfindung ist, dass nur ohnehin notwendige Schnittstellen 2,7 und Multiplexer 3,6 verwendet werden. Es ist also kein zusätzlicher Hardwareaufwand notwendig, lediglich eine geeignete Programmierung der Multiplexer 3,6 und der Fernauslösegeräte 1,8.

### Bezugszeichenliste

- 1: erstes Fernauslösegerät
- 2: erste Schnittstelle
- 3: erster Multiplexer
- 4: erster Übertragungsweg
- 5: zweiter Übertragungsweg
- 6: zweiter Multiplexer
- 7: zweite Schnittstelle
- 8: zweites Fernauslösegerät

## Patentansprüche

1. Verfahren zur redundanten Übertragung von Schutzbefehlen zwischen Fernauslösegeräten, in welchem
• ein erstes Fernauslösegerät (1) eine Nutzinformation, welche einen Schutzbefehl oder ein Ruhesignal repräsentiert, redundant in mindestens zwei Zeitschlitzen über mindestens zwei Kanäle einer ersten Schnittstelle (2) an einen ersten Multiplexer (3) überträgt,
• jedem der Zeitschlitze ein unterschiedlicher Übertragungsweg (4,5) zugeordnet ist, und
• der erste Multiplexer (3) die Nutzinformation jedes Zeitschlitzes über den zugeordneten Übertragungsweg (4,5) übermittelt.

2. Verfahren gemäss Anspruch 1 , wobei
• ein zweiter Multiplexer (6) die Nutzinformation von den mindestens zwei unterschiedlichen Übertragungswegen (4,5) empfängt,
• jedem der Übertragungswege (4,5) ein Zeitschlitz einer zweiten Schnittstelle (7) zugeordnet ist, und
• der zweite Multiplexer (6) die Nutzinformation jedes Übertragungsweges (4,5) im zugeordneten Zeitschlitz über die zweite Schnittstelle (7) an ein zweites Fernauslösegerät (8) überträgt.

3. Verfahren gemäss Anspruch 2, wobei aus mindestens zwei redundant übertragenen Schutzbefehlen mittels einer ODER-Verknüpfung ein kombinierter Schutzbefehl für das zweite Fernauslösegerät (8) gebildet wird.

4. Verfahren gemäss Anspruch 3, wobei der kombinierten Schutzbefehl jeweils um eine vorgebbare Zeitdauer verlängert wird.

5. Einrichtung zur redundanten Übertragung von Schutzbefehlen zwischen Fernauslösegeräten, aufweisend
• ein erstes Fernauslösegerät (1), welches zur redundanten Übertragung einer Nutzinformation, welche einen Schutzbefehl oder ein Ruhesignal repräsentiert, in mindestens zwei Zeitschlitzen über mindestens zwei Kanäle einer ersten Schnittstelle (2) eingerichtet ist, und
• einen ersten Multiplexer (3), welcher zum Empfang der über die erste Schnittstelle (2) übertragenen Nutzinformation und zur Übermittlung der Nutzinformation jedes Zeitschlitzes über einen jedem Zeitschlitz zugeordneten unterschiedlichen Übertragungsweg (4,5) eingerichtet ist.

6. Einrichtung gemäss Anspruch 5, aufweisend
einen zweiten Multiplexer (6), der zum Empfang der Nutzinformation von den mindestens zwei unterschiedlichen Übertragungswegen (4,5) und zur Übertragung der Nutzinformation jedes Übertragungsweges (4,5) in den Übertragungswegen (4,5) jeweils zugeordneten Zeitschlitzen über eine zweite Schnittstelle (7) an ein zweites Fernauslösegerät (8) eingerichtet ist.

7. Einrichtung gemäss Anspruch 6, aufweisend Mittel zur ODER-Verknüpfung von mindestens zwei redundant übertragenen Schutzbefehlen zu einem kombinierten Schutzsignal.

8. Einrichtung gemäss Anspruch 7, aufweisend Mittel zur zeitlichen Verlängerung des kombinierten Schutzsignals um eine vorgebbare Zeitdauer.

## Claims

1. Method for redundant transmission of protection commands between remote tripping devices, in which
• a first remote tripping device (1) redundantly transmits useful information, which represents a protection command or a rest signal, in at least two time slots via at least two channnels of a first interface (2) to a first multiplexer (3),
• each of the time slots is allocated a different transmission path (4, 5), and
• the first multiplexer (3) transmits the useful information in each time slot via the associated transmission path (4, 5).

2. Method according to Claim 1, in which
• a second multiplexer (6) receives the useful information from the at least two different transmission paths (4, 5),
• each of the transmission paths (4, 5) is allocated one time slot in a second interface (7), and
• the second multiplexer (6) transmits the useful information on each transmission path (4, 5) in the associated time slot via the second interface (7) to a second remote tripping device (8).

3. Method according to Claim 2, in which a combined protection command for the second remote tripping device (8) is formed from at least two redundantly transmitted protection commands by means of an OR logic operation.

4. Method according to Claim 3, in which the combined protection command is in each case lengthened by a time period which can be predetermined.

5. Device for redundant transmission of protection commands between remote tripping devices, having
• a first remote tripping device (1) which is set up for redundant transmission of useful information, which represents a protection command or a rest signal, in at least two time slots via at least two channels of a first interface (2), and
• a first multiplexer (3) is set up to receive useful information transmitted via the first interface (2) and to transmit the useful information in each time slot via a different transmissions path (4, 5) which is allocated to each time slot.

6. Device according to Claim 5, having
a second multiplexer (6), which is set up to receive useful information from the at least two different transmission paths (4, 5) and to transmit the useful information on each transmission path (4, 5) in the time slots which are respectively allocated to the transmission paths (4, 5), via a second interface (7) to a second remote tripping device (8).

7. Device according to Claim 6, having means for the OR logic operation of at least two redundantly transmitted protection commands to form a combined protection signal.

8. Device according to Claim 7, having means for lengthening the time duration of the combined protection signal by a time period which can be predetermined.

## Revendications

1. Procédé de transmission redondante d'instructions de protection entre des appareils de déclenchement à distance dans lequel
* un premier appareil de déclenchement à distance (1) transmet une information utile, laquelle représente une instruction de protection ou un signal de repos, de manière redondante dans au moins deux créneaux temporels par le biais d'au moins deux canaux d'une première interface (2) à un premier multiplexeur (3),
* une voie de transmission (4, 5) différente est associée à chacun des créneaux temporels, et
* le premier multiplexeur (3) communique l'information utile de chaque créneau temporel par le biais de la voie de transmission (4, 5) associée.

2. Procédé selon la revendication 1,
* un deuxième multiplexeur (6) recevant l'information utile des au moins deux voies de transmission (4, 5) différentes,
* un créneau temporel d'une deuxième interface (7) étant associé à chacune des voies de transmission (4, 5),
* le deuxième multiplexeur (6) transmettant l'information utile de chaque voie de transmission (4, 5) dans le créneau temporel associé par le biais de la deuxième interface (7) à un deuxième appareil de déclenchement à distance (8).

3. Procédé selon la revendication 2, une instruction de protection commune pour le deuxième appareil de déclenchement à distance (8) étant formée au moyen d'une combinaison OU à partir d'au moins deux instructions de protection transmises de manière redondante.

4. Procédé selon la revendication 3, l'instruction de protection combinée étant à chaque fois prolongée d'une durée pouvant être prédéfinie.

5. Dispositif de transmission redondante d'instructions de protection entre des appareils de déclenchement à distance, présentant
* un premier appareil de déclenchement à distance (1) qui est conçu pour la transmission redondante d'une information utile, laquelle représente une instruction de protection ou un signal de repos, dans au moins deux créneaux temporels par le biais d'au moins deux canaux d'une première interface (2), et
* un premier multiplexeur (3) qui est conçu pour recevoir l'information utile transmise par le biais de la première interface (2) et pour communiquer l'information utile de chaque créneau temporel par le biais d'une voie de transmission (4, 5) différente associée à chaque créneau temporel.

6. Dispositif selon la revendication 5, présentant
* un deuxième multiplexeur (6) qui est conçu pour recevoir l'information utile des au moins deux voies de transmission (4, 5) différentes et pour transmettre l'information utile de chaque voie de transmission (4, 5) dans le créneau temporel à chaque fois associé aux voies de transmission (4, 5) par le biais d'une deuxième interface (7) à un deuxième appareil de déclenchement à distance (8).

7. Dispositif selon la revendication 6, présentant des moyens de combinaison OU d'au moins deux instructions de protection transmises de manière redondante en un signal de protection combiné.

8. Dispositif selon la revendication 7, présentant des moyens pour prolonger dans le temps le signal de protection combiné d'une durée pouvant être prédéfinie.
